# DEMANDE DE BREVET EUROPEEN

(11) **EP 4 552 824 A1**
(43) Date de publication de la demande: **14.05.2025**
(21) Numéro de dépôt: 24306877.2
(22) Date de dépôt: 08.11.2024
(51) Int. Cl.: B29C 48/66, B29C 48/53, B29C 48/34, H01B 13/14, B29C 48/154, B29C 48/505, B29C 48/535, B29C 48/06, B29C 48/50, B29C 48/25, B29C 48/395

(54) **VIS D'EXTRUSION, EXTRUDEUSE ET PROCÉDÉ DE FABRICATION D'UN CÂBLE ÉLECTRIQUE PAR EXTRUSION D'UNE COMPOSITION À BASE D'UN POLYMÈRE DE PROPYLÈNE AVEC UNE VIS D'EXTRUSION À DÉBIT AMÉLIORÉ**

(30) Priorité: 09.11.2023 FR 2312266
(71) Demandeur: Nexans, 92400 Courbevoie (FR)
(72) Inventeur: SADIK, Tarik, 92400 COURBEVOIE (FR); PUISSANT, Stephan, 92400 COURBEVOIE (FR)
(74) Mandataire: Cabinet Boettcher

(57) **Abrégé**

L'invention concerne une vis d'extrusion pour extrudeuse pour l'extrusion d'au moins une couche thermoplastique extrudée entourant un élément électriquement conducteur allongé d'un câble électrique, la vis d'extrusion présentant un diamètre extérieur noté D et comprenant un corps de vis (24) s'étendant le long d'un axe longitudinal (A), la vis d'extrusion comprenant en outre le long de cet axe longitudinal (A) :
- une zone d'alimentation (30) d'au moins un polymère thermoplastique sous forme solide, la zone d'alimentation comprenant un filet d'alimentation (50) s'étendant autour du corps de vis,
- une zone de compression (32) de la composition d'extrusion comprenant un filet de compression (52) s'étendant autour du corps de vis,
- une zone barrière (34) comprenant un filet principal et un filet secondaire pour la fusion graduelle du polymère en une composition d'extrusion, la distance séparant les filets principal et secondaire variant le long de l'axe longitudinal (A),
dans laquelle les zones d'alimentation (30) et de compression (32) comprennent respectivement un unique filet d'alimentation et un unique filet de compression, chacun des filets d'alimentation et de compression présentant une profondeur de filet (Pa, Pc) prise perpendiculairement à l'axe longitudinal (A) entre une extrémité de filet et le corps de vis (24) entre 0,11D et 0,16D.

## Description

### Domaine technique

La présente invention concerne une vis d'extrusion, une extrudeuse comprenant une telle vis d'extrusion ainsi qu'un procédé de fabrication d'un câble électrique, notamment du type câble d'énergie, utilisant une telle extrudeuse.

Ce câble électrique comprend une couche thermoplastique extrudée obtenue à partir d'au moins un polymère thermoplastique choisi parmi un homopolymère et un copolymère de propylène. La couche thermoplastique peut également être obtenue au moyen d'une composition d'extrusion comprenant ledit au moins un polymère thermoplastique et au moins un liquide diélectrique.

### Arrière-plan technologique

Cette invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Un câble de transport d'énergie à moyenne ou à haute tension comprend généralement de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

Pour l'extrusion de couche isolante d'un câble électrique, il est commun d'utiliser une vis d'extrusion du type vis barrière ou vis à profil barrière, i.e. une vis comprenant une zone dénommée « zone barrière ». Cette zone barrière comprend en particulier un filet principal et un filet secondaire avec un pas légèrement supérieur (balayant progressivement la largeur du chenal) qui permet de séparer le polymère fondu du polymère encore solide, comme s'il matérialisait la frontière entre les deux phases. La zone barrière permet une compression du lit solide et par conséquent une amélioration de la capacité de fusion de la vis d'extrusion.

Ces vis barrière comportent une zone d'alimentation située au niveau d'une extrémité proximale de la vis d'extrusion destinée à être disposée au niveau de l'alimentation de la vis d'extrusion, e.g. d'une trémie. Cette zone d'alimentation est suivie d'une zone de compression et d'une zone barrière permettant la fusion graduelle du polymère et le transport vers la sortie de l'extrudeuse pour être appliquée autour de l'élément électriquement conducteur allongé.

La zone d'alimentation présente généralement une profondeur de filet constante sur tout ou partie de sa longueur. La zone de compression est caractérisée par le fait que la profondeur de filet est dégressive sur tout ou partie de sa longueur pour comprimer la composition d'extrusion. La frontière entre les zones d'alimentation et de compression correspond ainsi généralement à la section de la vis d'extrusion au niveau de laquelle la profondeur de filet commence à décroitre.

Pour obtenir des débits améliorés d'extrusion, il est connu de fournir la zone d'alimentation de la vis d'extrusion avec au moins deux filets décalés angulairement de 180° autour de la vis d'extrusion de manière à augmenter la compression du polymère. Il est également connu d'augmenter localement le diamètre du corps de vis au niveau de la zone d'alimentation, sous la forme d'un bulbe, pour davantage comprimer la matière pour augmenter le débit d'extrusion. Ce profil de vis d'extrusion est généralement couplé avec un fourreau entourant la vis d'extrusion muni d'une pluralité de rainures hélicoïdales au niveau de ce bulbe.

Il est par ailleurs usuel que la profondeur de filet, prise perpendiculairement à l'axe longitudinal de la vis d'extrusion entre la corps de vis et l'extrémité du filet, au niveau de la zone d'alimentation soit égale ou inférieure à 0,1 0D, c'est-à-dire 8mm pour une vis d'extrusion d'un diamètre de 80mm.

Un inconvénient majeur de ce type de vis d'extrusion est que malgré les attributs spécifiques fournis à la vis d'extrusion, le débit d'extrusion n'est pas suffisant. Ainsi, il est généralement nécessaire d'investir dans une nouvelle extrudeuse ayant un diamètre supérieur pour augmenter le débit d'extrusion ce qui est très onéreux.

De plus, lorsque la composition d'extrusion intègre un liquide diélectrique, ce dernier a tendance à être rejeté vers l'extrémité proximal de la vis d'extrusion ce qui nuit à la qualité de la composition d'extrusion.

Il existe donc un besoin pour une vis d'extrusion améliorée permettant une augmentation du débit d'extrusion pour un même fourreau, en particulier lorsque la composition d'extrusion comprend un polymère thermoplastique ayant l'un parmi un homopolymère et un copolymère de propylène. Il existe également un besoin pour une vis d'extrusion permettant de réduire, voire de supprimer, le rejet du liquide diélectrique la composition d'extrusion intègre un tel liquide diélectrique.

### Résumé de l'invention

Pour cela, l'invention propose une vis d'extrusion pour extrudeuse pour l'extrusion d'au moins une couche thermoplastique extrudée entourant un élément électriquement conducteur allongé d'un câble électrique, la vis d'extrusion présentant un diamètre extérieur, noté D, et comprenant un corps de vis s'étendant le long d'un axe longitudinal, la vis d'extrusion comprenant en outre le long de cet axe longitudinal :
- une zone d'alimentation d'au moins un polymère thermoplastique sous forme solide, la zone d'alimentation comprenant un filet d'alimentation s'étendant autour du corps de vis,
- une zone de compression de la composition d'extrusion comprenant un filet de compression s'étendant autour du corps de vis,
- une zone barrière comprenant un filet principal et un filet secondaire pour la fusion graduelle du polymère en une composition d'extrusion, la distance séparant les filets principal et secondaire variant le long de l'axe longitudinal, dans laquelle les zones d'alimentation et de compression comprennent respectivement un unique filet d'alimentation et un unique filet de compression, chacun des filets d'alimentation et de compression présentant une profondeur de filet prise perpendiculairement à l'axe longitudinal entre une extrémité de filet et le corps de vis entre 0,11 D et 0,16D.

Une telle vis d'extrusion comportant des zones d'alimentation et de compression avec un unique filet ayant une profondeur de filet comprise entre 0,11 D et 0,16D présente un profil amélioré permettant une augmentation importante du débit d'extrusion.

Il est important de rappeler que les vis d'extrusion ont généralement un diamètre standard, notamment pouvant varier de 45 à 175mm. Par exemple, ce diamètre peut être de 80mm, de 120mm ou bien de 150mm. Ce diamètre D correspond au diamètre extérieur de la vis d'extrusion, ainsi qu'au diamètre intérieur du fourreau associé. Ainsi, lorsque la profondeur de filet d'une vis d'extrusion est augmentée, le diamètre du corps de vis est de manière corrélée diminué de la même valeur. Dès lors, une augmentation de la profondeur du filet réduit le diamètre du corps de vis et donc sa résistance mécanique. La variation de la profondeur de filet, même dans des valeurs minimes, peut entrainer de très fortes variations des caractéristiques mécaniques d'une vis d'extrusion.

Ici, il a été observé par l'inventeur de cette invention que la combinaison d'un unique filet au niveau des zones d'alimentation et de compression avec une augmentation de la profondeur de filet entre 0,11D et 0,16D permet une augmentation significative du débit d'extrusion.

De plus, un tel profil des zones d'alimentation et de compression permet d'éviter tout rejet du liquide diélectrique lorsque celui-ci est compris dans la composition d'extrusion. Il a en effet été observé que la diminution de l'effort de compression de la composition au niveau des zones d'alimentation et de compression permet au liquide diélectrique d'avancer le long de la vis d'extrusion sans être rejeté vers l'arrière de la vis d'extrusion. En effet, une fois que le liquide diélectrique est suffisamment éloigné de la zone d'alimentation, le polymère thermoplastique alimentant l'extrudeuse forme une barrière au liquide diélectrique qui ne peut plus revenir vers l'arrière de la vis d'extrusion.

On entend par le fait que chacun des filets d'alimentation et de compression présentent une profondeur de filet prise perpendiculairement à l'axe longitudinal entre une extrémité de filet et le corps de vis entre 0,11D et 0,16D, le fait que chacun de ces filets d'alimentation et de compression présentent au moins localement une profondeur de filet dans cette plage de valeur. L'un ou les deux parmi les filets d'alimentation et de compression peut ainsi présenter localement une valeur en dehors de cette plage de valeur sans sortir du champ de l'invention.

Selon un mode de réalisation, les filets d'alimentation et de compression présente une profondeur de filet entre 0,12D et 0,14D, de préférence entre 0,13D et 0,14D.

Selon un mode de réalisation, la zone de compression comprend une portion proximale de compression disposée au niveau de la zone d'alimentation et une portion distale de compression disposée au niveau de la zone barrière, le filet de compression présentant une profondeur de filet P variable entre les première et deuxième portions de compression.

Selon un mode de réalisation, le filet de compression présente une première profondeur de filet au niveau de la portion proximale de compression, égale à la profondeur de filet de la zone d'alimentation, et une deuxième profondeur de filet au niveau de la portion distale de compression, la deuxième profondeur de filet étant inférieure à la première profondeur de filet. Cette réduction de la profondeur de filet le long de la zone de compression génère une compression de la matière étant donné que le diamètre interne du fourreau est constant sur cette portion. Ainsi, l'espace disponible pour la matière se réduit et induit ladite compression.

Selon un mode de réalisation, la profondeur de filet de la zone de compression varie de manière linéaire entre les première et deuxième profondeurs de filet.

Selon un mode de réalisation, la zone de compression présente une longueur le long de l'axe longitudinal comprise entre 6D à 11D.

Selon un mode de réalisation, la vis d'extrusion comprend en outre une zone de mélange dispersif après la zone barrière.

Selon un mode de réalisation, la zone de mélange dispersif définit au moins un canal d'entrée de la composition d'extrusion dans la zone de mélange dispersif et au moins un canal de sortie de la composition d'extrusion depuis la zone de mélange dispersif, ledit au moins un canal d'entrée étant séparé dudit au moins un canal de sortie par un filet de passage configuré pour autoriser le passage de la composition d'extrusion depuis un canal d'entrée vers un canal de sortie et cisailler ladite composition lors dudit passage.

L'invention propose également une extrudeuse pour l'extrusion d'un câble électrique comprenant au moins un élément électriquement conducteur allongé et au moins une couche thermoplastique extrudée entourant ledit élément électriquement conducteur allongé, ladite extrudeuse comprenant :
- un organe d'alimentation en polymère thermoplastique sous forme solide,
- un fourreau alimenté par l'organe d'alimentation,
- une vis d'extrusion telle que décrite ci-avant disposée à l'intérieur du fourreau et permettant la fusion progressive du polymère pour former une composition d'extrusion et le transport de cette composition d'extrusion le long de la vis d'extrusion jusqu'à une extrémité distale de la vis d'extrusion,
- une tête d'extrusion disposée au niveau de l'extrémité distale de la vis d'extrusion et configurée pour appliquer la composition autour d'un élément électriquement conducteur allongé.

Selon un mode de réalisation, le fourreau présente un orifice d'alimentation formé en regard de la zone d'alimentation de la vis d'extrusion, le fourreau comprenant en outre, au niveau d'une paroi intérieure et à la suite de l'orifice d'alimentation, une pluralité de rainures s'étendant le long de l'axe longitudinal sur une distance entre 0,5D et 1,5D, de préférence entre 1D et 1,5D.

Les rainures ont pour fonction d'augmenter la friction entre la paroi interne du fourreau et les éléments de la composition d'extrusion. L'augmentation de cette friction participe à améliorer le débit d'extrusion.

Selon un mode de réalisation, les rainures sont rectilignes le long de l'axe longitudinal.

Selon un mode de réalisation, les rainures présentent une profondeur de 0,5 à 2mm, de préférence de 1mm, le long d'un axe radial à l'axe longitudinal.

Selon un mode de réalisation, la vis d'extrusion comprend une zone de pompage entre la zone barrière et l'extrémité distale de la vis d'extrusion. Cette zone de pompage a pour fonction de stabiliser la composition d'extrusion, notamment après son passage dans la zone de mélange dispersif lorsqu'elle est présente.

Selon un mode de réalisation, ladite zone de pompage comprend un filet de pompage s'étendant autour du corps de vis, le filet de pompage présentant une profondeur de filet prise perpendiculairement à l'axe longitudinal entre une extrémité de filet et le corps de vis entre 0,06D et 0,11D.

Selon un mode de réalisation, le filet de la zone de pompage présente une profondeur de filet entre 0,07D et 0,10D, de préférence entre 0,08D et 0,09D

Selon un mode de réalisation, la vis d'extrusion présente un taux de compression compris entre 1,2 et 2, de préférence entre 1,5 et 1,7, le taux de compression étant déterminé avec l'équation suivante : CR = Pa/Pp, CR étant le taux de compression, Pa étant la profondeur de filet de la zone d'alimentation et Pp étant la profondeur de filet de la zone de pompage.

Le taux de compression est de préférence entre 1,6 et 1,7.

Un taux de compression entre 1,5 et 1,7 permet d'obtenir un débit d'extrusion très amélioré pour l'extrusion d'une composition comprenant un polymère thermoplastique sous forme solide choisi parmi un homopolymère de propylène et un copolymère de propylène. Ainsi, une telle vis d'extrusion est particulièrement bien adaptée à l'extrusion de compositions comprenant l'un ou plusieurs parmi un homopolymère de propylène et un copolymère de propylène.

D'une manière générale, la vis d'extrusion est de préférence telle que :
- la zone d'alimentation présente une longueur le long de l'axe longitudinal entre 1D et 4D, de préférence entre 2D et 3D, de manière encore préférée de 2D ; et/ou
- la zone de compression présente une longueur le long de l'axe longitudinal entre 6D et 11D, de préférence entre 8D et 10D ; et/ou
- la zone barrière présente une longueur le long de l'axe longitudinal entre 6D et 11D, de préférence entre 8D et 10D ; et/ou
- la zone de mélange dispersif présente une longueur le long de l'axe longitudinal entre 2D et 5D, de préférence entre 3D et 4D ; et/ou
- la zone de pompage présente une longueur le long de l'axe longitudinal entre 0,5D et 3D, de préférence entre 1D et 2D.

A titre d'exemple préférentiel, une vis d'extrusion d'une longueur de 24D présente une zone d'alimentation d'une longueur de 2D, une zone de compression de 8D, une zone barrière d'une longueur de 8D, une zone de mélange dispersif de 3D et une zone de pompage d'une longueur de 1D.

A titre d'exemple préférentiel, une vis d'extrusion d'une longueur de 30D présente une zone d'alimentation d'une longueur de 2D, une zone de compression de 10D, une zone barrière d'une longueur de 10D, une zone de mélange dispersif de 4D et une zone de pompage d'une longueur de 2D.

On entend par « longueur de la vis d'extrusion » la longueur fonctionnelle de la vis d'extrusion entre le début de la zone d'alimentation et la fin de la zone de pompage, i.e. l'extrémité distale de la vis d'extrusion. Cette longueur correspond à la longueur de la vis d'extrusion destinée à être au contact de la composition d'extrusion.

L'invention propose en outre un procédé de fabrication d'un câble électrique comprenant au moins un élément électriquement conducteur allongé et au moins une couche thermoplastique extrudée entourant ledit élément électriquement conducteur allongé, ledit procédé mettant en oeuvre une extrudeuse telle que décrite ci-avant, caractérisé en ce qu'il comprend au moins les étapes suivantes :
i) une étape d'introduction d'au moins un polymère thermoplastique sous forme solide choisi parmi un homopolymère de propylène et un copolymère de propylène, dans la zone d'alimentation de la vis d'extrusion,
ii) une étape au cours de laquelle ledit au moins un polymère thermoplastique est amenée de la zone d'alimentation vers la zone de compression et la zone barrière permettant la fusion graduelle du polymère thermoplastique en une composition d'extrusion ainsi que le transport de la composition d'extrusion vers la tête d'extrusion située à la sortie de l'extrudeuse, et
iii) une étape d'application au niveau de la tête d'extrusion de la composition d'extrusion issue de l'étape ii) autour de l'élément électriquement conducteur allongé.

Selon un mode de réalisation, l'étape d'introduction prévoit l'introduction d'au moins un liquide diélectrique dans la zone d'alimentation de la vis d'extrusion.

Selon un mode de réalisation, le procédé comprend en outre en amont de l'étape d'application une étape de mélange dispersif de la composition d'extrusion au moyen de la zone de mélange dispersif de la vis d'extrusion.

Dans la présente invention, l'expression « température ambiante » signifie une température variant de 15 à 30°C environ, et de préférence variant de 20 à 25°C environ.

Selon un mode de réalisation de l'invention, l'extrudeuse mettant en oeuvre le procédé de l'invention est une extrudeuse monovis. Elle comprend donc une unique vis.

Le copolymère de propylène de la composition de l'étape i) peut être un copolymère hétérophasé de propylène, un copolymère statistique de propylène ou un de leurs mélanges.

Le copolymère hétérophasé de propylène comprend généralement une phase thermoplastique de type propylène et une phase élastomère de type copolymère d'éthylène et d'une oléfine α¹.

La phase élastomère du copolymère hétérophasé peut représenter au moins 20% en masse environ, et de préférence au moins 45% en masse environ, par rapport à la masse totale du copolymère hétérophasé.

L'oléfine α¹ de la phase élastomère du copolymère hétérophasé peut être le propylène.

À titre d'exemple de ce type de copolymère, on peut mentionner le copolymère hétérophasé commercialisé par la société Basell Polyolefins sous la référence Adflex^{®} Q 200 F.

Le copolymère statistique de propylène peut être un copolymère de propylène et d'oléfine, l'oléfine étant notamment choisie parmi l'éthylène et une oléfine α² différente du propylène.

L'oléfine α² différente du propylène peut répondre à la formule CH2=CH R1, dans laquelle R1 est un groupe alkyle linéaire ou ramifié ayant de 2 à 10 atomes de carbone, notamment choisi parmi les oléfines suivantes : 1 butène, 1-pentène ; 4-méthyl-1-pentène, 1-hexène, 1-octène, 1-décène, 1-dodécène, et un de leurs mélanges.

L'oléfine α² représente de préférence au plus 15% en mole environ et de préférence encore au plus 10% en mole environ du copolymère.

Un copolymère de propylène et d'éthylène est préféré à titre de copolymère statistique de propylène.

À titre d'exemple, on préfère tout particulièrement le copolymère statistique de propylène commercialisé par la société Borealis sous la référence Bormed^{®} RB 845 MO.

Les copolymères statistiques de propylène utilisables selon l'invention ont de préférence un module élastique allant de 600 à 1200 MPa environ.

Les homopolymères de propylène utilisables selon l'invention ont de préférence un module élastique allant de 1250 à 1600 MPa environ.

L'homopolymère (respectivement le copolymère statistique de propylène) peut avoir une température de fusion supérieure à 130°C environ, de préférence supérieure à 140°C environ, et de préférence encore allant de 140 à 165°C environ.

L'homopolymère (respectivement le copolymère statistique de propylène) peut avoir une enthalpie de fusion allant de 30 à 100 J/g environ.

L'homopolymère (respectivement le copolymère statistique de propylène) peut avoir un indice de fluidité allant de 0,5 à 3 g/10 min environ, mesuré à 230°C environ avec une charge de 2,16 kg environ selon la norme ASTM D1238-00.

La composition de l'étape i) peut comprendre en outre un polyéthylène sous forme solide.

Ledit liquide diélectrique représente une quantité inférieure à 15% en masse, par rapport à la masse totale de la composition de l'étape i).

Le polyéthylène est de préférence un polyéthylène haute densité, un polyéthylène moyenne densité ou un polyéthylène linéaire basse densité.

Un polyéthylène dit de « haute densité » ou HDPE selon la norme ISO 1183A (à une température de 23°C) a une densité variant de 0,930 à 0,970 g/cm3 environ, et encore plus préférentiellement de 0,940 à 0,965 g/cm3 environ.

Un polyéthylène « moyenne densité » ou MDPE selon la norme selon la norme ISO 1183A (à une température de 23°C) a une densité allant de 0,925 à 0,930 g/cm3 environ.

Un polyéthylène linéaire dit de « basse densité » ou LLDPE selon la norme ISO 1183A (à une température de 23°C) a une densité allant de 0,91 à 0,925 g/cm3 environ.

L'homopolymère de propylène peut représenter de 40% à 90% en masse environ, et de préférence de 40 à 70% en masse, environ par rapport à la masse totale de la composition de l'étape i).

Le copolymère statistique de propylène peut représenter de 40% à 90% en masse environ, et de préférence de 40 à 70% en masse environ, par rapport à la masse totale de la composition de l'étape i).

Le copolymère hétérophasé de propylène peut représenter de 5% à 60% en masse, et de préférence de 5 à 50% en masse environ, par rapport à la masse totale de la composition de l'étape i).

Le polyéthylène peut représenter de 20% à 60% en masse environ, et de préférence de 20 à 50% en masse environ, par rapport à la masse totale de la composition de l'étape i).

Selon une forme de réalisation préférée de l'invention, la composition comprend à titre de polymères :
- un copolymère statistique de propylène (e.g. de 50-70% en masse environ, par rapport à la masse totale de la composition), un copolymère hétérophasé de propylène (e.g. de 5-30% en masse environ, par rapport à la masse totale de la composition) et un polyéthylène linéaire basse densité (e.g. de 20-40% en masse environ, par rapport à la masse totale de la composition), ou
- un copolymère hétérophasé de propylène (e.g. de 35-55% en masse environ, par rapport à la masse totale de la composition) et un polyéthylène haute densité (e.g. de 35-55% en masse environ, par rapport à la masse totale de la composition).

De telles combinaisons de polymères en association avec le liquide diélectrique permettent d'obtenir une couche thermoplastique, notamment du type couche électriquement isolante, présentant de bonnes propriétés mécaniques, notamment en termes de module élastique, et électriques.

Les polymères de la composition étant sous forme solide, ils peuvent être sous la forme de pastilles ou de granulés.

La composition de l'étape i) peut comprendre en outre un ou plusieurs additifs.

Les additifs sont bien connus de l'homme du métier et peuvent être choisis parmi des antioxydants, des agents anti-UV, des retardateurs de flamme, des colorants, des agents anti-cuivre, des agents anti-arborescences d'eau et un de leurs mélanges.

La composition peut typiquement comprendre de 0,01 à 5% en masse environ, et de préférence de 0,1 à 2% en masse environ d'additifs, par rapport à la masse totale de la composition de l'étape i).

Plus particulièrement, les antioxydants permettent de protéger la composition des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine et un de leurs mélanges.

À titre d'exemples de phénols encombrés, on peut citer le pentaérythritoltétrakis(3-(3,5-di-tert-butyl-4-hydroxyphényl)propionate) (Irganox^{®} 1010), l'octadécyl 3-(3,5-di-tert-butyl-4-hydroxyphényl)propionate (Irganox^{®} 1076), le 1,3,5-triméthyl-2,4,6-tris(3,5-di-tert-butyl-4-hydroxybenzyl)benzène (Irganox^{®} 1330), le 4,6-bis (octylthiométhyl)-o-crésol (Irgastab^{®} KV10), le 2,2' thiobis(6 tert-butyl-4-méthylphénol) (Irganox^{®} 1081), le 2,2' thiodiéthylène bis[3-(3,5-di-tert-butyl-4-hydroxyphényl) propionate] (Irganox^{®} 1035), le 2,2' méthylènebis(6-tert-butyl-4-méthylphénol), le 1,2 bis(3,5-di-tert-butyl-4-hydroxyhydrocinnamoyl) hydrazine (Irganox^{®} MD 1024), et le 2,2'-oxamido-bis(éthyl-3(3,5-di-tert-butyl-4-hydroxyphényle)propionate).

À titre d'exemples de thioesters, on peut citer le didodécyl-3,3'-thiodipropionate (Irganox^{®} PS800), ledistéarylthiodipropionate (Irganox^{®} PS802) et le 4,6-bis(octylthiométhyle)-o-crésol (Irganox^{®} 1520).

À titre d'exemples d'antioxydants à base de soufre, on peut citer le dioctadecyl-3,3'-thiodipropionate et le didodecyl-3,3'-thiodipropionate.

À titre d'exemples d'antioxydants à base de phosphore, on peut citer le tris(2,4-di-tert-butyl-phényle)phosphite (Irgafos^{®} 168) et le bis(2,4-di-tert-butylphényl)pentaérythritoldiphosphite(Ultranox^{®} 626).

À titre d'exemples d'antioxydants de type amine, on peut citer les phénylène diamines (e.g. 1PPD ou 6PPD), les diphénylamine styrène, les diphénylamines, les mercaptobenzimidazoles et le 2,2,4-triméthyl-1,2 dihydroquinoline polymérisé (TMQ).

À titre d'exemples de mélanges d'antioxydants, on peut citer l'Irganox B 225 qui comprend un mélange équimolaire d'Irgafos 168 et d'Irganox 1010 tels que décrits ci-dessus.

Le liquide diélectrique peut représenter de 3 à 10% en masse environ.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente schématiquement une vue partiellement en coupe d'une extrudeuse comprenant notamment une vis d'extrusion et un fourreau ;
[fig. 2] La figure 2 représente schématiquement une vue partiellement en coupe et en perspective d'un câble électrique obtenu avec l'extrudeuse de la figure 1 ;
[fig. 3] La figure 3 représente une vue de côté d'une vis d'extrusion comprenant une zone d'alimentation, une de compression, une zone barrière ainsi qu'une zone de mélange dispersif ;
[fig. 4] La figure 4 représente une vue détaillée de côté des zones d'alimentation et de compression d'une vis d'extrusion ;
[fig. 5] La figure 5 représente une vue détaillée en perspective de la zone de mélange dispersif de la vis d'extrusion de la figure 3 ;
[fig. 6] La figure 6 représente une vue détaillée en coupe d'un fourreau d'extrudeuse présentant une pluralité de rainures rectilignes destinées à s'étendre le long de l'axe longitudinal de la vis d'extrusion.

### Description de mode(s) de réalisation

Pour des raisons de clarté, seuls les éléments essentiels pour la compréhension de l'invention ont été représentés de manière schématique sur ces figures, et ceci sans respect de l'échelle.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

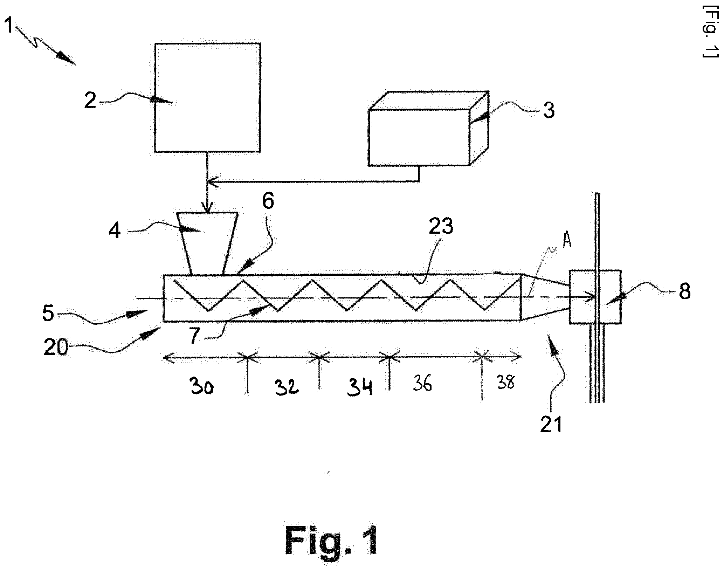

Sur la figure 1, le dispositif 1 comprend un container 2 pouvant être alimenté par des granulés d'un polymère thermoplastique, une trémie d'alimentation 4 pouvant être alimentée par les granulés du polymère thermoplastique contenues dans le container 2 et une extrudeuse 5 comprenant par exemple un fourreau 6, une vis d'extrusion 7 et une tête d'extrusion 8.

Le fourreau 6 forme une cavité interne dans laquelle est disposée la vis d'extrusion 7. Le fourreau 6 est alimenté en polymère thermoplastique par un organe d'alimentation, ici la trémie d'alimentation 4.

Un container ou réservoir 3 peut également être mis en place pour alimenter la trémie d'alimentation 4, ou plus généralement l'extrudeuse 5, en liquide diélectrique.

Le polymère thermoplastique sous forme solide comprend de préférence un thermoplastique à base de propylène comme un homopolymère de propylène ou un copolymère de propylène.

La vis d'extrusion 7 s'étend le long d'un axe longitudinal A. La vis d'extrusion 7 est configurée pour être déplacée en rotation autour de l'axe longitudinal A.

La vis d'extrusion 7 comprend un corps de vis 24 s'étendant le long de l'axe longitudinal A ainsi qu'un ou plusieurs filets s'étendant autour du corps de vis 24. La vis d'extrusion 7 s'étend entre une extrémité proximale 20, proche de l'organe d'alimentation, et une extrémité distale 21, proche de la tête d'extrusion 8. La vis d'extrusion 7 permet une augmentation de la pression du polymère thermoplastique pour réaliser une fusion graduelle de ce polymère thermoplastique, le transport de celui-ci et, de manière optionnelle, son mélangeage jusqu'à la tête d'extrusion 8 où la composition formée par le polymère thermoplastique fondu est appliquée autour d'un élément électriquement conducteur allongé.

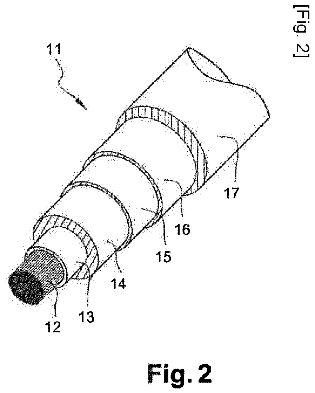

En référence à la figure 2, le câble d'énergie 11 à moyenne ou haute tension obtenu selon le procédé de l'invention, comprend un élément électriquement conducteur allongé central 12, notamment en cuivre ou en aluminium, et, successivement et coaxialement comprend autour de cet élément 12, une première couche semi-conductrice 13 dite « couche semi-conductrice interne », une couche électriquement isolante 14, une deuxième couche semi conductrice 15 dite « couche semi-conductrice externe », un écran métallique 16 du type tube cylindrique, et une gaine extérieure de protection 17.

La couche électriquement isolante 14 est extrudée au moyen de l'extrudeuse 5 et de la vis d'extrusion 7.

Les couches 13 et 15 sont des couches extrudées par des procédés bien connus de l'homme du métier.

La présence de l'écran métallique 16 et de la gaine extérieure de protection 17 est préférentielle, mais non essentielle.

L'extrudeuse 5 peut être une extrudeuse à vis unique tel qu'illustré en figure 1 ou bien une extrudeuse à double vis. Ainsi, l'extrudeuse 5 comprend au moins une vis d'extrusion 7.

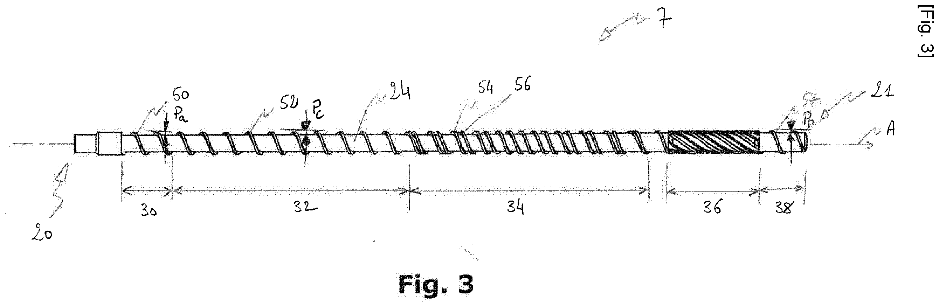

En référence à la figure 3, la vis d'extrusion 7 comprend successivement le long de l'axe longitudinal A une zone d'alimentation 30, une zone de compression 32 et une zone barrière 34.

La zone d'alimentation 30 de la vis d'extrusion 7 est destinée à venir en regard d'un orifice d'alimentation 40 du fourreau 6 pour l'alimentation de la vis d'extrusion 7 et du fourreau 6 dudit au moins un polymère thermoplastique sous forme solide. L'orifice d'alimentation 40 présente une ouverture le long de l'axe longitudinal A de préférence de 1D.

De manière préférée, l'orifice d'alimentation 40 est disposé en regard d'une portion proximale de la zone d'alimentation 30, plus proche de l'extrémité proximale 20 de la vis d'extrusion 7. La zone d'alimentation 30 comprend également une portion distale disposée entre la portion proximale de la zone d'alimentation 30 et la zone de compression 32.

La zone d'alimentation 30 comprend un unique filet d'alimentation 50 s'étendant autour du corps de vis 24, le long de l'axe longitudinal A. On entend par « unique filet d'alimentation », le fait qu'un seul filet parcours la zone d'alimentation 30.

La zone d'alimentation 30 présente une profondeur de filet Pa, prise perpendiculairement à l'axe longitudinal A entre une extrémité du filet d'alimentation 50 et le corps de vis 24.

La zone d'alimentation 30 présente une longueur le long de l'axe longitudinal A entre 1D et 4D, de préférence entre 2 et 3D.

La zone de compression 32 de la composition d'extrusion est disposée entre la zone d'alimentation 30 et la zone barrière 34. La zone de compression 32 a pour fonction de comprimer le polymère thermoplastique et le transporter vers la zone barrière 34.

La zone de compression 32 comprend un unique filet de compression 52 s'étendant autour du corps de vis 24, le long de l'axe longitudinal A. On entend par « unique filet de compression », le fait qu'un seul filet parcours la zone de compression 32. Les filets d'alimentation 50 et de compression 52 s'étendent de préférence de manière continue l'un après l'autre de sorte qu'ils forment un seul et même filet s'étendant le long des zones d'alimentation 30 et de compression 32.

La zone de compression 32 présente une profondeur de filet Pc, prise perpendiculairement à l'axe longitudinal A entre une extrémité du filet de compression 52 et le corps de vis 24.

La zone de compression 32 présente une longueur le long de l'axe longitudinal A entre 6D et 11D. La variation de longueur de la zone de compression 32 dépend par exemple de la longueur de la vis d'extrusion 7 pour un même diamètre D. A titre d'exemple, la zone de compression 32 peut être d'une longueur de 6D à 8D pour une vis d'extrusion 7 d'une longueur totale de 24D ou de 25D mais d'une longueur de 10D pour une vis d'extrusion 7 d'une longueur totale de 30D. Le principe de l'invention et les avantages associés sont conservés quel que soit la longueur totale de vis choisie.

Les filets d'alimentation 50 et de compression 52 présentent respectivement une profondeur de filet Pa et une profondeur de filet Pc, prise perpendiculairement à l'axe longitudinal A entre une extrémité de filet et le corps de vis 24, entre 0,11D et 0,16D, de préférence entre 0,12D et 0,14D, de manière encore préférée entre 0,13D et 0,14D. Cette profondeur de filet permet de maximiser le débit d'extrusion de la composition tout en garantissant une résistance mécanique suffisante de la vis d'extrusion 7. Cet équilibre est d'autant plus optimal entre 0,13D et 0,14D.

La profondeur de filet Pa du filet d'alimentation 50 est de préférence constante le long de la zone d'alimentation 30. Ainsi, le diamètre du corps de vis 24 est également constant le long de cette zone d'alimentation 30.

La profondeur de filet Pc du filet de compression 52 est de préférence variable le long de l'axe longitudinal A. En particulier, la zone de compression 32 comprend une portion proximale de compression disposée au niveau de la zone d'alimentation 30 et une portion distale de compression disposée au niveau de la zone barrière 34. La profondeur de filet Pc du filet de compression 52 présente une profondeur de filet Pc variable entre les portions proximale et distale de compression.

La profondeur de filet Pc du filet de compression 52 est de préférence dégressive le long de l'axe longitudinal A. En particulier, la profondeur de filet Pc du filet de compression 52 présente une profondeur de filet Pc dégressive depuis la portion proximale de compression vers la portion distale de compression.

La profondeur de filet Pc du filet de compression 52 présente de préférence une profondeur de filet Pc linéairement dégressive depuis la portion proximale de compression vers la portion distale de compression.

Ainsi, le filet de compression 52 présente une première profondeur de filet Pc1 au niveau de la portion proximale de compression et une deuxième profondeur de filet Pc2 au niveau de la portion distale de compression. La deuxième profondeur de filet Pc2 est inférieure à la première profondeur de filet Pc1. La première profondeur de filet Pc1 est de préférence égale à la profondeur de filet Pa du filet d'alimentation 50. Dès lors, la première profondeur de filet Pc1 est entre 0,11D et 0,16D, de préférence entre 0,12D et 0,14D, de manière encore préférée entre 0,13D et 0,14D.

La deuxième profondeur de filet Pc2 est de préférence entre 0,10D et 0,13D, de préférence entre 0,11D et 0,12D.

Le diamètre du corps de vis 24 décroit donc de préférence le long de l'axe longitudinal A entre les portions proximale et distale de compression. Cette réduction de la profondeur de filet Pc permet la mise en compression de la composition d'extrusion.

La zone barrière 34 est disposée entre la zone de compression 32 et l'extrémité distale 21 de la vis d'extrusion 7. La zone barrière 34 comprend un filet principal 54 et un filet secondaire 56 pour la fusion graduelle du polymère en une composition d'extrusion. Le filet secondaire 56 présente un pas supérieur au filet principal 54 pour permettre de séparer le polymère fondu du polymère encore solide. Le filet secondaire 56 balaye donc la largeur du chenal formé par l'espace entre deux spires du filet principal 54, comme s'il matérialisait la frontière entre les deux phases. La zone barrière 34 permet une compression du lit solide et par conséquent une amélioration de la capacité de fusion de la vis d'extrusion 7.

Les dimensions du filet secondaire 56, notamment la profondeur de filet prise perpendiculairement à l'axe longitudinal A, permettent uniquement au polymère sous forme fondue de franchir le filet secondaire 56.

La vis d'extrusion 7 peut comprendre en outre une zone de mélange dispersif 36 après la zone barrière 34, en particulier entre la zone barrière 34 et l'extrémité distale 21 de la vis d'extrusion 7.

La zone de mélange dispersif 36 a pour fonction de générer un effort important de cisaillement sur la composition d'extrusion pour améliorer son mélangeage, notamment lorsque la composition comprend un liquide diélectrique.

La zone de mélange dispersif 36 définit au moins un canal d'entrée de la composition d'extrusion dans la zone de mélange dispersif et au moins un canal de sortie de la composition d'extrusion depuis la zone de mélange dispersif. Ledit au moins un canal d'entrée est séparé dudit au moins un canal de sortie par un filet de passage configuré pour autoriser le passage de la composition d'extrusion depuis un canal d'entrée vers un canal de sortie et cisailler ladite composition lors dudit passage.

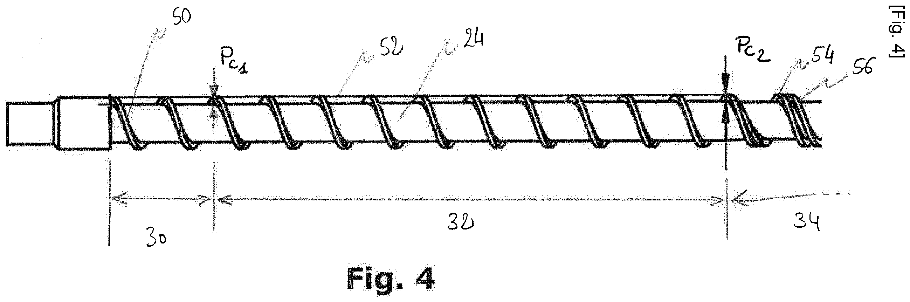

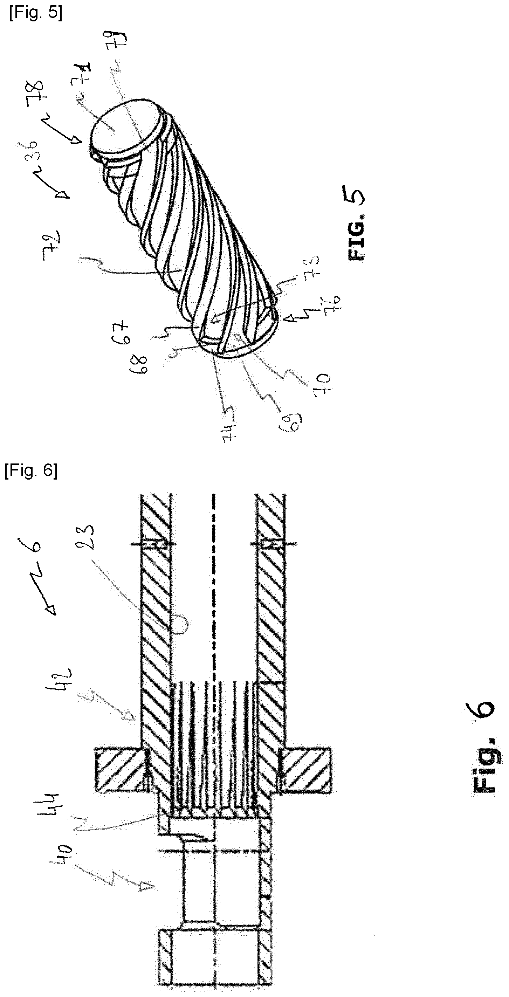

En référence à la figure 5, la zone de mélange dispersif 36 comprend une succession de filets de passage 67 et de filets de raclage 68 définissant entre eux une pluralité de canaux d'entrée 70 et de canaux de sortie 73. En particulier, les filets de passage 67 et de raclage 68 s'alternent autour du corps de vis 24 de manière à former une alternance de canaux d'entrée 70 et de sortie 73. Ainsi, chaque canal d'entrée 70 ou de sortie 73 est formé par un filet de passage 67 et un filet de raclage 68. Sur l'exemple de la figure 4, la zone de dispersion comprend 4 canaux d'entrée 70 et 4 canaux de sorties.

On entend par « corps de vis », une portion du corps de la vis d'extrusion 7. Autrement dit, le corps de vis 24 est une section de la vis d'extrusion 7 correspondant à la zone de mélange dispersif 36.

Les filets de passage 67 et de raclage 68 s'étendent de préférence le long de trajectoires hélicoïdales autour et le long du corps de vis 24. Les filets de passage et de raclage 68 sont de préférence équirépartis autour de ce corps de vis 24.

Chaque canal d'entrée 70 forme une ouverture d'entrée 69 au niveau d'une extrémité proximale 76 de la zone de mélange dispersif 76 pour permettre l'entrée de la composition dans le canal d'entrée 70. Chaque canal d'entrée 70 comprend un élément d'obstruction 74 fermant le canal d'entrée 70 au niveau d'une extrémité distale 78 de la zone de mélange dispersif 36. Cet élément d'obstruction 74 est de préférence configuré pour permettre le passage de la composition tout en la cisaillant d'une valeur prédéterminée. Ainsi, la composition peut sortir du canal d'entrée en passant par-dessus l'élément d'obstruction 74 mais se fait cisailler.

Chaque canal de sortie 73 est fermé par un élément d'obstruction 74 disposé au niveau de l'extrémité proximale 76 de la zone de mélange dispersif 36 de manière à empêcher, au moins partiellement, l'écoulement de la composition vers les canaux de sortie 73 depuis la zone barrière. L'écoulement de la composition est donc facilité vers les canaux d'entrée 70. Chaque canal de sortie 73 forme en outre une ouverture de sortie 79 formé au niveau de l'extrémité distale 78 de la zone de mélange dispersif 36. Cet élément d'obstruction 74 est de préférence configuré pour permettre le passage de la composition tout en la cisaillant d'une valeur prédéterminée. Pour cela, la hauteur de l'élément d'obstruction est de préférence choisie pour générer cette valeur de cisaillement. Ainsi, la composition peut entrer dans le canal de sortie 73 en passant par-dessus l'élément d'obstruction 74 mais se fait cisailler.

Les filets de passage 67 séparant des canaux d'entrée 70 et de sortie 73 adjacents sont configurés pour permettre le passage de la composition tout en la cisaillant d'une valeur prédéterminée. Pour cela, la hauteur des filets de passage 67 est choisie pour générer cette valeur de cisaillement. Ainsi, la composition peut passer d'un canal d'entrée 70 vers un canal de sortie 73 en passant par-dessus d'un filet de passage 67 mais se fait cisailler.

Les filets de raclage 68 sont configurés pour empêcher le passage de la composition entre des canaux d'entrée 70 et de sortie 73 adjacents au niveau de ce filet de raclage 68. La composition est ainsi guidée vers un filet de passage 67 ou un élément d'obstruction 74 pour se faire cisailler avant de sortir de la zone de mélange dispersif 36.

A la sortie de la zone barrière 34, la composition d'extrusion traverse donc la zone de mélange dispersif 36 en passant par un canal d'entrée 70 et/ou un canal de sortie 73 en étant cisaillé d'une valeur prédéterminée soit par au moins un élément d'obstruction 74 d'un canal de sortie 73, soit par au moins un filet de passage 67, soit par au moins un élément d'obstruction 74 d'un canal d'entrée 70.

Les canaux d'entrée 70 et de sortie 73 s'étendent autour et le long du corps de vis 24. Les canaux d'entrée 70 et de sortie 73 s'étendent de préférence sur au moins 75%, de préférence au moins 95%, de la longueur de la zone de mélange dispersif 36 le long d'un axe longitudinal A de la vis d'extrusion 7.

Les filets de passage 67 et de raclage 68 ont de préférence une largeur différente les uns des autres. Cette largeur est définie perpendiculairement à la trajectoire d'extension des filets. De manière préférée, un rapport de 2 est défini entre la largeur d'un filet de passage 67 et d'un filet de raclage 68.

Selon un exemple de réalisation de la zone de mélange dispersif 36, chaque filet de raclage 68 présente une largeur de 0,1D et chaque filet de passage 67 présente une largeur de 0,2D.

Le pas des filets de passage 67 et de raclage 68 est par exemple défini comme étant 4*D, D étant le diamètre du corps de vis 24 au niveau de la zone de mélange dispersif 36. Le pas est ainsi de 600 pour un diamètre de 150mm. Ce diamètre de 150mm est considéré comme étant le diamètre nominal du fourreau recevant la vis d'extrusion ou bien le diamètre externe des filets de vis, en négligeant le jeu de fonctionnement pouvant être de 0,1mm. La zone de mélange dispersif 36 présente par exemple une longueur de 450mm le long de l'axe longitudinal A.

En référence à la figure 6, le fourreau 6 comprend un orifice d'alimentation 40 destinée à faire face à la zone d'alimentation 30 de la vis d'extrusion 7 lorsque la vis d'extrusion 7 est disposée dans le fourreau 6. Le fourreau 6 comprend en outre une portion initiale 42 disposée en aval de l'orifice d'alimentation 40 par rapport au sens de circulation de la composition d'extrusion dans le fourreau 6. La portion initiale 42 de la zone de compression 32 est destinée à être disposée en regard de la zone d'alimentation 30 et/ou de la zone de compression 32.

Cette portion initiale 42 comprend de préférence, au niveau d'une paroi intérieure 23 du fourreau 6, une pluralité de rainures 44 s'étendant le long de l'axe longitudinal A de la vis d'extrusion 7. Les rainures sont de préférence rectilignes. Les rainures s'étendent de préférence le long de l'axe longitudinal A sur une distance entre 0,5D et 1,5D, de manière encore préférée sur une distance de 1D. Les rainures 44 sont de préférence en regard de la zone d'alimentation 30.

La combinaison de ces rainures 44 avec le profil des filets des zones d'alimentation 30 et de compression 32 participe à l'augmentation du débit d'extrusion.

La vis d'extrusion 7 comprend également une zone de pompage 38 entre la zone barrière 34 et l'extrémité distale 21 de la vis d'extrusion 7. La zone de pompage 38 comprend un filet de pompage 57 s'étendant autour du corps de vis 24.

Le filet de pompage 57 présente une profondeur de filet Pp prise perpendiculairement à l'axe longitudinal A entre une extrémité de filet et le corps de vis entre 0,06D et 0,11D. Le filet de pompage 57 de la zone de pompage 38 présente de préférence une profondeur de filet entre 0,07D et 0,10D, de manière encore préférée entre 0,08D et 0,09D.

La vis d'extrusion 7 présente un taux de compression CR compris entre 1,2 et 2, de préférence entre 1,5 et 1,7. Le taux de compression CR est déterminé avec l'équation suivante : CR = Pa/Pp,
CR étant le taux de compression, Pa étant la profondeur de filet de la zone d'alimentation et Ps étant la profondeur de filet de la zone de pompage.

Le taux de compression est de préférence entre 1,6 et 1,7.

L'invention prévoit également un procédé de fabrication d'un câble électrique comprenant au moins un élément électriquement conducteur allongé et au moins une couche thermoplastique extrudée entourant ledit élément électriquement conducteur allongé. Ledit procédé met en oeuvre une extrudeuse 5 telle que décrite ci-avant.

Le procédé de fabrication comprend au moins les étapes suivantes :
i) une étape d'introduction d'au moins un polymère thermoplastique sous forme solide choisi parmi un homopolymère de propylène et un copolymère de propylène, dans la zone d'alimentation 30 de la vis d'extrusion 7,
ii) une étape au cours de laquelle ledit au moins un polymère thermoplastique est amenée de la zone d'alimentation 30 vers la zone de compression 32 et la zone barrière 34 permettant la fusion graduelle du polymère thermoplastique en une composition d'extrusion ainsi que le transport de la composition d'extrusion vers la tête d'extrusion 8 située à la sortie de l'extrudeuse 5, et
iii) une étape d'application au niveau de la tête d'extrusion 8 de la composition d'extrusion issue de l'étape ii) autour de l'élément électriquement conducteur allongé.

L'étape d'introduction prévoit de préférence l'introduction d'au moins un liquide diélectrique dans la zone d'alimentation 30 de la vis d'extrusion 7. Cette introduction d'au moins un liquide diélectrique peut être conjointe à l'introduction du polymère thermoplastique.

Le procédé de fabrication peut également prévoir, en amont de l'étape d'application, une étape de mélange dispersif de la composition d'extrusion au moyen de la zone de mélange dispersif 36 de la vis d'extrusion 7.

## Revendications

1. Vis d'extrusion pour extrudeuse pour l'extrusion d'au moins une couche thermoplastique (14) extrudée entourant un élément électriquement conducteur allongé d'un câble électrique (11), la vis d'extrusion présentant un diamètre extérieur, noté D, et comprenant un corps de vis (24) s'étendant le long d'un axe longitudinal (A), la vis d'extrusion comprenant en outre le long de cet axe longitudinal (A) :
- une zone d'alimentation (30) d'au moins un polymère thermoplastique sous forme solide, la zone d'alimentation comprenant un filet d'alimentation (50) s'étendant autour du corps de vis,
- une zone de compression (32) de la composition d'extrusion comprenant un filet de compression (52) s'étendant autour du corps de vis,
- une zone barrière (34) comprenant un filet principal et un filet secondaire pour la fusion graduelle du polymère en une composition d'extrusion, la distance séparant les filets principal et secondaire variant le long de l'axe longitudinal (A),
dans laquelle les zones d'alimentation (30) et de compression (32) comprennent respectivement un unique filet d'alimentation et un unique filet de compression, chacun des filets d'alimentation et de compression présentant une profondeur de filet (Pa, Pc) prise perpendiculairement à l'axe longitudinal (A) entre une extrémité de filet et le corps de vis (24) entre 0,11D et 0,16D.

2. Vis d'extrusion selon la revendication 1, dans laquelle les filets d'alimentation et de compression présente une profondeur de filet (Pa, Pc) entre 0,12D et 0,14D, de préférence entre 0,13D et 0,14D.

3. Vis d'extrusion selon la revendication 1 ou 2, dans laquelle la zone de compression comprend une portion proximale de compression disposée au niveau de la zone d'alimentation et une portion distale de compression disposée au niveau de la zone barrière, le filet de compression présentant une profondeur de filet (Pc) variable entre les portions proximale et distale de compression.

4. Vis d'extrusion selon la revendication 3, dans laquelle le filet de compression présente une première profondeur de filet (Pc1) au niveau de la portion proximale de compression, égale à la profondeur de filet Pa de la zone d'alimentation, et une deuxième profondeur de filet (Pc2) au niveau de la portion distale de compression, la deuxième profondeur de filet (Pc2) étant inférieure à la première profondeur de filet (Pc1).

5. Vis d'extrusion selon la revendication 4, dans laquelle la profondeur de filet (Pc) de la zone de compression varie de manière linéaire entre les première (Pc1) et deuxième (Pc2) profondeurs de filet.

6. Vis d'extrusion selon l'une quelconque des revendications précédentes, dans laquelle la zone de compression présente une longueur le long de l'axe longitudinal (A) comprise entre 6D à 11D.

7. Vis d'extrusion selon l'une quelconque des revendications précédentes, comprenant en outre une zone de pompage entre la zone barrière et une extrémité distale de la vis d'extrusion, ladite zone de pompage comprenant un filet de pompage s'étendant autour du corps de vis, le filet de pompage présentant une profondeur de filet (Pp) prise perpendiculairement à l'axe longitudinal (A) entre une extrémité de filet et le corps de vis entre 0,06D et 0,11D.

8. Vis d'extrusion selon la revendication 7, dans lequel la vis d'extrusion présente un taux de compression (CR) compris entre 1,2 et 1,7, de préférence entre 1,5 et 1,7, le taux de compression (CR) étant déterminé avec l'équation suivante : CR = Pa/Pp,
CR étant le taux de compression, Pa étant la profondeur de filet de la zone d'alimentation et Pp étant la profondeur de filet de la zone de pompage.

9. Vis d'extrusion selon l'une quelconque des revendications précédentes, comprenant en outre une zone de mélange dispersif après la zone barrière.

10. Vis d'extrusion selon la revendication 9, dans laquelle la zone de mélange dispersif définit au moins un canal d'entrée de la composition d'extrusion dans la zone de mélange dispersif et au moins un canal de sortie de la composition d'extrusion depuis la zone de mélange dispersif, ledit au moins un canal d'entrée étant séparé dudit au moins un canal de sortie par un filet de passage configuré pour autoriser le passage de la composition d'extrusion depuis un canal d'entrée vers un canal de sortie et cisailler ladite composition lors dudit passage.

11. Extrudeuse (5) pour l'extrusion d'un câble électrique (11) comprenant au moins un élément électriquement conducteur allongé (12) et au moins une couche thermoplastique (14) extrudée entourant ledit élément électriquement conducteur allongé, ladite extrudeuse comprenant :
- un organe d'alimentation (4) en polymère thermoplastique sous forme solide,
- un fourreau (6) alimenté par l'organe d'alimentation,
- une vis d'extrusion (7) selon l'une quelconque des revendications 1 à 10 disposée à l'intérieur du fourreau (6) et permettant la fusion progressive du polymère pour former une composition d'extrusion et le transport de cette composition d'extrusion le long de la vis d'extrusion (7) jusqu'à une extrémité distale (21) de la vis d'extrusion (7),
- une tête d'extrusion (8) disposée au niveau de l'extrémité distale (21) de la vis d'extrusion (7) et configurée pour appliquer la composition autour d'un élément électriquement conducteur allongé.

12. Extrudeuse selon la revendication 11, dans laquelle le fourreau présente un orifice d'alimentation formé en regard de la zone d'alimentation de la vis d'extrusion, le fourreau comprenant en outre, au niveau d'une paroi intérieure et à la suite de l'orifice d'alimentation, une pluralité de rainures s'étendant le long de l'axe longitudinal (A) sur une distance entre 0,5D et 1,5D.

13. Extrudeuse selon la revendication 12, dans laquelle les rainures sont rectilignes le long de l'axe longitudinal (A).

14. Procédé de fabrication d'un câble électrique comprenant au moins un élément électriquement conducteur allongé et au moins une couche thermoplastique extrudée entourant ledit élément électriquement conducteur allongé, ledit procédé mettant en oeuvre une extrudeuse selon l'une des revendications 11 à 13, **caractérisé en ce qu'**il comprend au moins les étapes suivantes :
i) une étape d'introduction d'au moins un polymère thermoplastique sous forme solide choisi parmi un homopolymère de propylène et un copolymère de propylène, dans la zone d'alimentation de la vis d'extrusion,
ii) une étape au cours de laquelle ledit au moins un polymère thermoplastique est amenée de la zone d'alimentation vers la zone de compression et la zone barrière permettant la fusion graduelle du polymère thermoplastique en une composition d'extrusion ainsi que le transport de la composition d'extrusion vers la tête d'extrusion située à la sortie de l'extrudeuse, et
iii) une étape d'application au niveau de la tête d'extrusion de la composition d'extrusion issue de l'étape ii) autour de l'élément électriquement conducteur allongé.

15. Procédé selon la revendication 14, dans lequel l'étape d'introduction prévoit l'introduction d'au moins un liquide diélectrique dans la zone d'alimentation de la vis d'extrusion.

16. Procédé selon la revendication 14 ou 15, comprenant en outre en amont de l'étape d'application une étape de mélange dispersif de la composition d'extrusion au moyen de la zone de mélange dispersif de la vis d'extrusion.
